Europäisches Patentamt

European Patent Office

Office européen des brevets

(11) Publication number: **0 531 995 A2**

# EUROPEAN PATENT APPLICATION

(21) Application number: **92115496.9**

(22) Date of filing: **10.09.92**

(51) Int. Cl.5: **H02M 7/06**, H02M 1/10

(30) Priority: **10.09.91 JP 72348/91 U**

(43) Date of publication of application:
**17.03.93 Bulletin 93/11**

(84) Designated Contracting States:
**DE GB IT**

(71) Applicant: **FUJITSU LIMITED**
**1015, Kamikodanaka Nakahara-ku**
**Kawasaki-shi Kanagawa 211(JP)**

(72) Inventor: **Nishimura, Ken, c/o FUJITSU LIMITED**

Patent Department, 1015 Kamikodanaka
Nakahara-ku, Kawasaki-shi, Kanagawa
211(JP)
Inventor: **Kono, Ichiro, c/o FUJITSU LIMITED**
Patent Department, 1015 Kamikodanaka
Nakahara-ku, Kawasaki-shi, Kanagawa
211(JP)

(74) Representative: **Stebbing, Timothy Charles et al**
**Haseltine Lake & Co. Hazlitt House 28**
**Southampton Buildings Chancery Lane**
**London WC2A 1AT (GB)**

(54) **An AC/DC rectifier power source.**

(57) The circuit includes: a diode bridge (25) having first and second input terminals (16, 17) and first and second output terminals (15, 18) for rectifying the input AC voltage; two capacitors (26-1, 26-2) serially connected with each other via a mid-terminal (19) while two other terminals of the serial capacitors are respectively connected to the output terminals (15, 18) for smoothing the rectified output from the bridge (25); a first fuse (31) connected between a first input terminal (1) of the power source circuit and the first input terminal (16) of the bridge, or between a second input terminal (2) of the power source circuit and a connection point (22); a second fuse (32) connected between the second input terminal of the bridge and the connection point (22), the current rating of the second fuse being substantially less than that of the fist fuse; and a switch (21) connected between the connection point (22) and the mid-terminal (19). When a first AC voltage, typically 115 volts, is input to the power source circuit the switch (21) is kept closed so as to perform a voltage-doubler rectification, and when a second AC voltage, typically 230 volts, is input to the power source circuit the switch (21) is kept open so as to perform a full-wave rectification, while providing substantially the same DC output voltage.

EP 0 531 995 A2

Fig. 3 (a)

This invention relates to an input circuit of an AC/DC rectifier power source operable with different AC input voltages.

Some items of electronic apparatus, such as a printer or copying machine, are required to be usable in markets having different commercial AC (alternating current) power supplies; for example 115 volts in the U.S.A. and 230 volts in Europe. Accordingly, there have been proposed power supply circuits which are switchable between 115 and 230 volts.

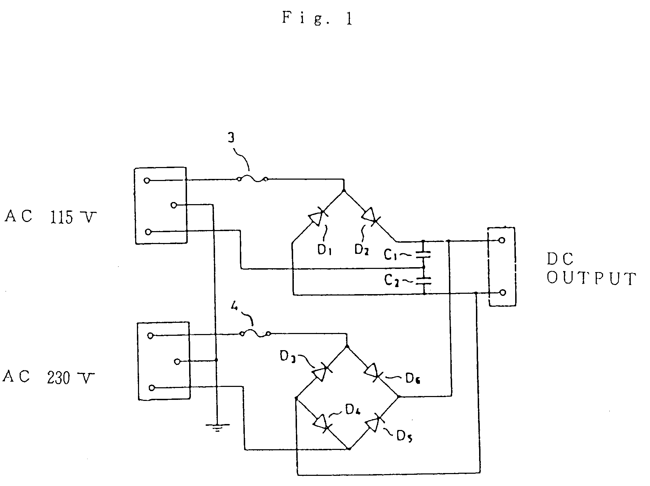

A typical prior art circuit configuration is disclosed in Japanese Unexamined Laid-open Provisional Publication Sho 62-81933, where independent input terminals and rectifiers (rectifier diodes) are provided respectively for two input AC voltages, as shown in Fig. 1. One of the input AC voltages, 115 volts or 230 volts, is input to the corresponding set of input terminals. Smoothing capacitors and DC (direct current) loads are commonly connected to the output terminals of the respective rectifiers. When a 115-volt supply is input, the rectifiers $D_1$ and $D_2$ perform a voltage-doubler rectification. When a 230-volt supply is input, the bridged rectifiers $D_3$ to $D_6$ simply perform a full-wave rectification. Respective fuses 3 and 4 are provided in series to the AC input terminals. The problem of this circuit configuration is that six rectifiers and two independent sets of input terminals are required, resulting in an increase in the physical size and the cost of the circuit.

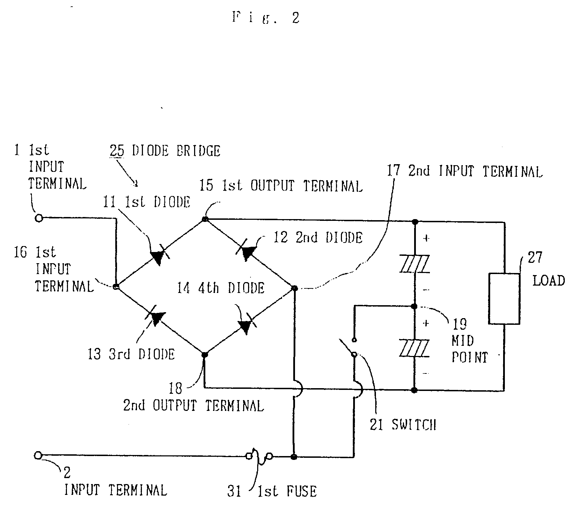

Another previously proposed circuit configuration is shown in Fig. 2, where the AC input terminals and the rectifiers are commonly utilised for the two input voltages, and a switch 21 is provided so as to select different input voltages. Similarly to the Fig. 1 circuit, when an AC supply of 230 volts is input the switch is kept open so that the four bridged rectifiers 11 to 14 simply perform a full-wave rectification, whereas when 115 volts is input the switch is kept closed so that the rectifiers 11 and 13 perform a voltage-doubler rectification. When the AC input voltage is 230 volts the AC input current is about half that when 115 volts is input. Accordingly, the fuse 31 must be correctly changed to meet the required current rating of the respective input voltage level, leading to a risk of confusion between the differently rated fuses during field maintenance.

An embodiment of the invention may provide a simple and inexpensive AC/DC rectifier power source that is switchable between at least two different AC input voltages, but does not require replacement of the fuse when the input voltage is changed.

An AC/DC rectifier power source circuit according to the present invention includes:-

a diode bridge having first and second input terminals and first and second output terminals, for rectifying an input AC voltage;

two capacitors serially connected with each other via a mid-terminal while two other terminals of the serial capacitors are respectively connected to the output terminals, said capacitors being provided to smooth the rectified output from the bridge;

a first fuse connected between the second input terminal of the power source circuit and a connection point;

a second fuse connected between the second input terminal of the bridge and the connection point, the current rating of the second fuse being substantially less than the current rating of the first fuse; and

a switch connected between the connection point and the mid-terminal.

When a first AC voltage, typically 230 volts, is input to the power source circuit the switch is kept open so as to perform a full-wave rectification, and when a second AC voltage, typically 115 volts, is input to the power source circuit the switch is kept closed so as to perform a voltage-doubler rectification, while providing substantially the same DC output voltage.

Reference is made, by way of example, to the accompanying drawings, in which:-

Fig. 1 illustrates a prior art circuit configuration;
Fig. 2 illustrates a previously proposed circuit configuration;
Fig. 3(a) and (b) illustrate a circuit configuration embodying the present invention; and
Fig. 4(a) and (b) illustrate current flow paths in the Fig. 3 circuit.

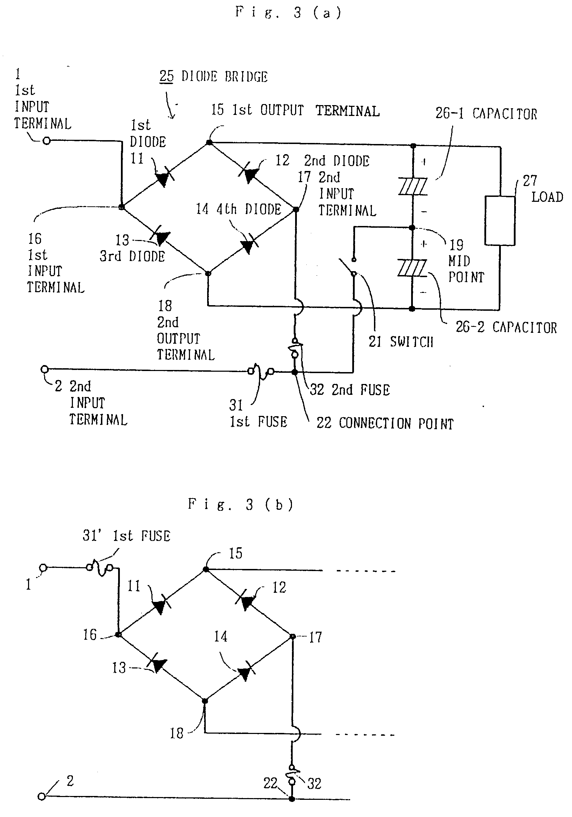

Referring to Fig. 3, a preferred embodiment of the present invention is hereinafter described. A diode bridge 25 is formed by first to fourth diodes 11 to 14. An AC voltage of either 115 or 230 volts, for example, is input to input terminals 1 and 2. AC input terminals 1 and 2 are connected to first and second input terminals 16 and 17 of the bridge 25 via a first fuse 31 and a second fuse 32. The first fuse 31 may be either in series with the second AC input terminal 2 as shown in Fig. 3(a), or in series with the first AC input terminal 1 as shown in Fig. 3(b). A first terminal of the second fuse 32 is connected to the second input terminal 17 of the bridge. Output terminals 15 and 18 of the bridge are connected to DC load 27. A series connection of two capacitors 26-1 and 26-2 is connected in parallel to the output terminals 15 and 18 so that the rectified output from the bridge is smoothed. A switch 21 is connected between a mid-point 19 of the two capacitors 26-1 and 26-2 and a second terminal of second fuse 32.

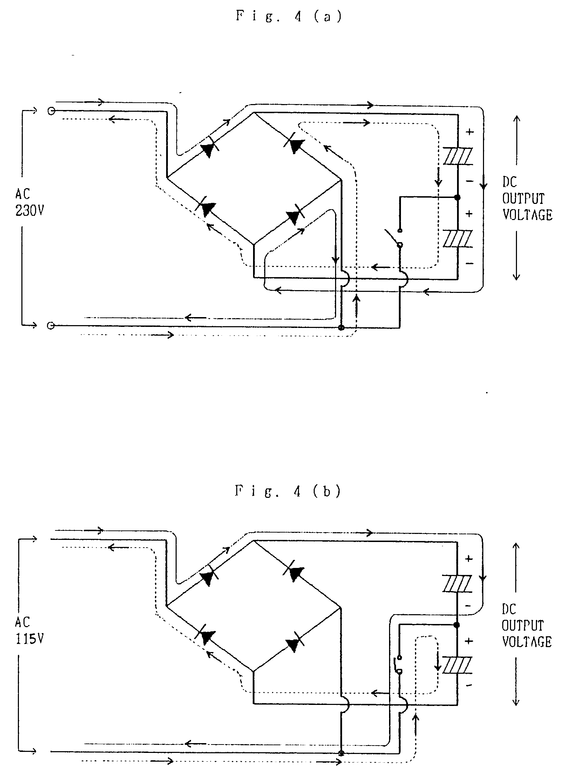

In a first case when a 200 to 230 volt r.m.s. (root mean square) AC voltage is input to input terminals 1 and 2, switch 21 is kept open so that the diode bridge and the serially connected capacitors perform a simple bridge-rectified full-wave rectification, where the serially-connected capacitors are charged up to approximately $\sqrt{2}(220\text{-}230)$ volts. Current flow in this operation is shown in Fig. 4(a).

In a second case when a 100 to 115 volt r.m.s. AC voltage is input to input terminals 1 and 2, switch 21 is kept closed so that first and third diodes 11 and 13 and the capacitors 26 perform a voltage-doubler rectification, where second and fourth diodes 12 and 14 are not conducting. Current flow in this operation is shown in Fig. 4(b). In Fig. 4 the solid arrow lines and the dotted lines indicate paths of current flows in the first half cycle and the second half cycle of the input AC voltage, respectively. Thus, due to switch 21 the output DC voltages generated across the series connection of the two capacitors are substantially the same though the input AC voltage is doubled/halved.

The output DC voltage is supplied to a load 27, which is typically a switching regulator to provide low DC voltages to electronic circuits.

In the first case, the amount of AC current flowing through the diode bridge is substantially half that in the second case. Accordingly, the second fuse 32 is connected to the bridge's second output terminal 17 through which only a small amount of current flows in the second case. The current rating of the second fuse 32 is chosen, for example, as 1A while that of the first fuse 31 is chosen as 2A. The second case current flows also through the first fuse 31. However, this causes no problem because the first fuse 31 is rated at almost twice the current rating of the second fuse 32. Thus, although the two cases have greatly different current flow, the respective fuse properly limits the current flow.

When the input AC voltage is changed, the only action required is to open or close switch 21. There is no need to change the fuse; accordingly, no need to search for the proper replacement fuse and no risk of confusion between differently rated fuses.

Though in the above description of the preferred embodiment the input voltages are referred to as 115 and 230 volts, it is apparent that the present invention can be embodied in a circuit where other input AC voltages are used, particularly but not exclusively where one of the input AC voltages is half the other. The relative sizes/ratings of the fuses and other components can be chosen to suit the relative sizes of the input AC voltages to be used. In addition, the basic configuration provided by the present invention can easily be extended to deal with more than two different input AC voltages.

## Claims

1. An AC/DC rectifier power source circuit switchable between at least two AC input voltages, and outputting a DC voltage, comprising:-

   first and second AC input terminals (1, 2);

   a diode bridge (25) having first and second input terminals (16, 17) and first and second output terminals (15, 18), for rectifying the AC voltage, said AC input terminals (1, 2) being directly or indirectly connected to said first and second input terminals (16, 17) of said bridge;

   two capacitors (26-1, 26-2) serially connected with each other via a mid-terminal (19), two other terminals of said serially connected capacitors being respectively connected to said output terminals (15, 18), said capacitors being provided to smooth the rectified output from said bridge;

   a first fuse (31) connected in series with one of said AC input terminals (1, 2);

   a second fuse (32) connected between said second input terminal (17) of said bridge and a connection point (22) to which the input AC voltage is supplied, the current rating of said second fuse being substantially smaller than that of said first fuse; and

   a switch (21) connected between said connection point (22) and said mid-terminal (19);

   whereby when a first AC voltage is input to the power source circuit, said switch (21) is kept open so as to perform a full-wave rectification, and

   when a second AC voltage which is substantially smaller than said first AC voltage is input to the power source circuit, said switch (21) is kept closed so as to perform a voltage-doubler rectification.

2. A power source circuit as claimed in claim 1, wherein said first fuse is connected between said first AC input terminal (1) and said first input terminal (16) of said bridge.

3. A power source circuit as claimed in claim 1, wherein said first fuse is connected between said second AC input terminal (2) and said connection point (22).

4. A power source circuit as claimed in claim 1, 2, or 3, wherein said first AC voltage is substantially twice said second AC voltage, whereby substantially the same DC voltage is output in response to said first or second AC voltage.

5. A power source circuit as claimed in claim 4, wherein said first AC voltage is around 200 to 230 volts, and said second AC voltage is around 100 to 115 volts.

Fig. 1

Fig. 2

1 1st
INPUT
TERMINAL

25 DIODE BRIDGE

15 1st OUTPUT TERMINAL

11 1st DIODE

17 2nd INPUT TERMINAL

16 1st
INPUT
TERMINAL

12 2nd DIODE

14 4th DIODE

27
LOAD

13 3rd DIODE

18
2nd OUTPUT TERMINAL

19
MID
POINT

21 SWITCH

2
INPUT TERMINAL

31 1st FUSE

Fig. 3 (a)

1
1st
INPUT
TERMINAL

25 DIODE BRIDGE

15 1st OUTPUT TERMINAL

26-1 CAPACITOR

1st
DIODE
11

12 2nd DIODE

17 2nd
INPUT
TERMINAL

14 4th DIODE

27
LOAD

16
1st
INPUT
TERMINAL

13
3rd DIODE

19
MID
POINT

18
2nd
OUTPUT
TERMINAL

26-2 CAPACITOR

21 SWITCH

2 2nd
INPUT
TERMINAL

31
1st FUSE

32 2nd FUSE

22 CONNECTION POINT

Fig. 3 (b)

31' 1st FUSE

15

1

11

12

16

14

17

13

18

2

22    32

Fig. 4 (a)

AC
230V

DC
OUTPUT
VOLTAGE

Fig. 4 (b)

AC
115V

DC
OUTPUT
VOLTAGE